# EUROPÄISCHE PATENTSCHRIFT

(11) **EP 1 316 375 B1**
(45) Veröffentlichungstag und Bekanntmachung des Hinweises auf die Patenterteilung: **22.06.2011**
(21) Anmeldenummer: 02026723.3
(22) Anmeldetag: 30.11.2002
(51) Int. Cl.: B23B 31/11

(54) **Vorrichtung zur Aufnahme von Werkzeugen**
Toolholder
Porte-outil

(30) Priorität: 01.12.2001 DE 20119569 U
(43) Veröffentlichungstag der Anmeldung: 04.06.2003
(73) Patentinhaber: AKE Knebel GmbH & Co., 72336 Balingen-Engstlatt (DE)
(72) Erfinder: Knebel, Albert, 72336 Balingen-Engstlatt (DE)
(74) Vertreter: Möbus, Daniela

(56) Entgegenhaltungen:
- WO-A-00/37204
- WO-A-00/76705
- DE-C- 876 793
- DE-C- 4 042 399
- DE-U- 29 919 851
- FR-A- 792 786
- US-A- 1 016 116
- US-A- 4 621 960
- US-A- 5 873 687
- US-A- 5 899 642
- SANDVIK LTD: "Rotating Tools Catalogue 2001" Februar 2001 (2001-02) , SANDVIK COROMANT , HALESOWEN, ENGLAND XP002227875 Seite A74 * Seite 74; Abbildungen * Seite A27 * Seite 27; Abbildungen *

## Beschreibung

Die Erfindung betrifft eine Vorrichtung zur Aufnahme von Werkzeugen an Werkzeugmaschinen mit einem Werkzeugaufnahmekegel, dessen Spitze in eine Gewindebohrung im Werkzeug einschraubbar ist, wobei der Aufnahmekegel mit einer Innenkonusfläche des Werkzeugs zu dessen Zentrierung zusammenwirkt.

Eine solche Vorrichtung ist bekannt aus der US-A-5,899,642.

Zum Spannen insbesondere von rotierend angetriebenen Werkzeugen an Werkzeugmaschinen sind Aufnahmevorrichtungen bekannt, die auf der Maschinenseite mit einem Konus versehen sind, der in eine konusförmige Aufnahme der Maschine einsetzbar und darin verspannbar ist. Die Konusflächen sorgen dabei für eine Zentrierung der Aufnahmevorrichtung. Zur Aufnahme des Werkzeugs weisen die bekannten Vorrichtungen Aufnahmehülsen mit einer Gewindebohrung auf, die auf der Außenseite in eine erweiterte Bohrung mit konischer Innenfläche übergehen. In diese Gewindebohrung mit konischem Außenabschnitt lassen sich an den Werkzeugen angeordnete Gewindezapfen einschrauben. Die Gewindezapfen ruhen dabei auf Kegelstümpfen, die an der erweiterten Bohrung mit Innenkonusfläche der Werkzeugaufnahmen zur Anlage kommen. Dadurch wird das Werkzeug in der Aufnahme zentriert.

Die bekannten Werkzeugaufnahmen haben jedoch den Nachteil, dass es notwendig ist, mit einem Schlüssel durch die Längsachse des Werkzeugs hindurchzufahren, um die Werkzeuge in der Aufnahme verspannen zu können. Die Werkzeugmontage und -demontage ist dadurch relativ umständlich.

Der vorliegenden Erfindung liegt die Aufgabe zugrunde, eine Spannvorrichtung insbesondere für rotierend antreibbare Werkzeuge zu schaffen, die eine hohe Rundlaufgenauigkeit aufweist, und die eine einfache Montage und Demontage der Werkzeuge erlaubt.

Die Aufgabe wird dadurch gelöst, dass der Werkzeugaufnahmekegel einstückig mit der Vorrichtung (10) gebaut ist und aus einer planen Fläche der Vorrichtung vorspringt, gegen die die Stirnseite des Werkzeugs nach Verschrauben des Werkzeugs mit der Werkzeugaufnahme zur Anlage kommt. Im aufgespannten Zustand liegt somit eine so genannte Überbestimmung vor, da sowohl an den Konusflächen von Werkzeug und Aufnahme als auch an der Planfläche der Aufnahme und der Stirnseite des Werkzeugs eine Flächenverbindung mit Anpressdruck zwischen Werkzeug und Aufnahme entsteht.

Der Werkzeugaufnahmekegel kann mittels eines an der Spitze der Werkzeugaufnahme angeordneten Gewindezapfens oder aber mittels des Schafts einer durch die Werkzeugaufnahme hindurchführbaren Schraube mit dem Werkzeug verschraubbar sein. Die Schraube kann dabei in ihrem Kopf eine Öffnung zum Ansetzen eines Werkzeugs, insbesondere eine Sechskant-Öffnung aufweisen.

Hier ist also nun nicht mehr am Werkzeug ein Gewindezapfen angeordnet, sondern die Werkzeugaufnahme in das Werkzeug einschraubbar. Es ist damit nicht mehr nötig, mit einem Schlüssel, beispielsweise einem Inbusschlüssel, durch die Längsachse des Werkzeugs hindurchzufahren, um das Werkzeug an der Aufnahme festspannen zu können. Der Aufnahmekegel, der mit der Innenkonusfläche oder erweiterten Bohrung des Werkzeugs zusammenwirkt, sorgt für eine exakte Zentrierung des Werkzeugs.

Die Werkzeugaufnahme kann außerdem in an sich bekannter Weise auf der Werkzeugmaschinenseite mit einem Konus versehen sein, der in eine entsprechend geformte Aufnahme der Werkzeugmaschine mit Innenkonus einführbar und verspannbar ist.

Zur leichten Montage und Demontage an der Werkzeugmaschine sowie zur Montage und Demontage des Werkzeugs kann die Vorrichtung außerdem Angriffsflächen oder Öffnungen für Schraubwerkzeuge aufweisen. Als Montagehilfsmittel eignen sich dabei insbesondere Gabel- oder Hakenschlüssel.

Der Gewindezapfen oder die Schraube können mit beliebigen Gewinden, beispielsweise metrischen Gewinden oder anderen Gewinden, versehen sein. Er kann auch entweder ein Rechts- oder ein Links-Gewinde aufweisen. Außerdem ist es möglich, ihn mit einem Feingewinde zu versehen. Bei Verwendung einer Schraube kann eine handelsübliche Schraube oder aber auch eine speziell gefertigte Schraube eingesetzt werden.

Mit der erfindungsgemäßen Vorrichtung ist somit eine hohe Rundlaufgenauigkeit von rotierenden Werkzeugen auch nach wiederholter Montage oder Demontage von Werkzeugen möglich. Die Vorrichtung schafft außerdem die Voraussetzung dafür, Bearbeitungswerkzeuge mit oder ohne Spannaufnahmen nachzuschärfen bzw. in Servicemaschinen zur Werkzeugschärfung aufzuspannen.

Die Erfindung betrifft außerdem eine erfindungsgemäße Vorrichtung mit einem Werkzeug zur Anordnung an der Vorrichtung, welches an einer seiner Stirnseiten eine Bohrung mit einer Innenkonusfläche aufweist, die an ihrer Spitze in eine Gewindebohrung mündet, wobei die Bohrungsöffnung an der Stirnseite des Werkzeugs von einer ringförmigen planen Anlagefläche begrenzt ist. Ein solchermaßen gestaltetes Werkzeug kann mit einer erfindungsgemäßen Vorrichtung verschraubt werden. Diese plane Anlagefläche kommt nach dem Aufschrauben des Werkzeugs an der planen Fläche der Aufnahmevorrichtung zur Anlage. Das Werkzeug ist dadurch gekennzeichnet, dass es Angriffsflächen oder Öffnungen für Schraubwerkzeuge zur Montage und Demontage an der Vorrichtung zur Aufnahme von Werkzeugen aufweist. Vorzugsweise handelt es sich bei dem Werkzeug um ein rotierend antreibbares Werkzeug wie einen Fräser oder Bohrer, doch können auch nicht rotierende Messwerkzeuge oder Einstellwerkzeuge in erfindungsgemäßer Weise ausgebildet sein.

Nachfolgend wird ein bevorzugtes Ausführungsbeispiel einer erfindungsgemäßen Werkzeugaufnahme und eines erfindungsgemäßen Werkzeugs anhand der Zeichnung näher beschrieben.

Es zeigen:
- Fig. 1: eine Seitenansicht einer erfindungsgemäßen Werkzeugaufnahme;
- Fig. 2: eine Seitenansicht eines erfindungsgemäßen Werkzeugs;

- Fig. 3: eine Seitenansicht auf eine alternative Ausgestaltung einer Werkzeugaufnahme.

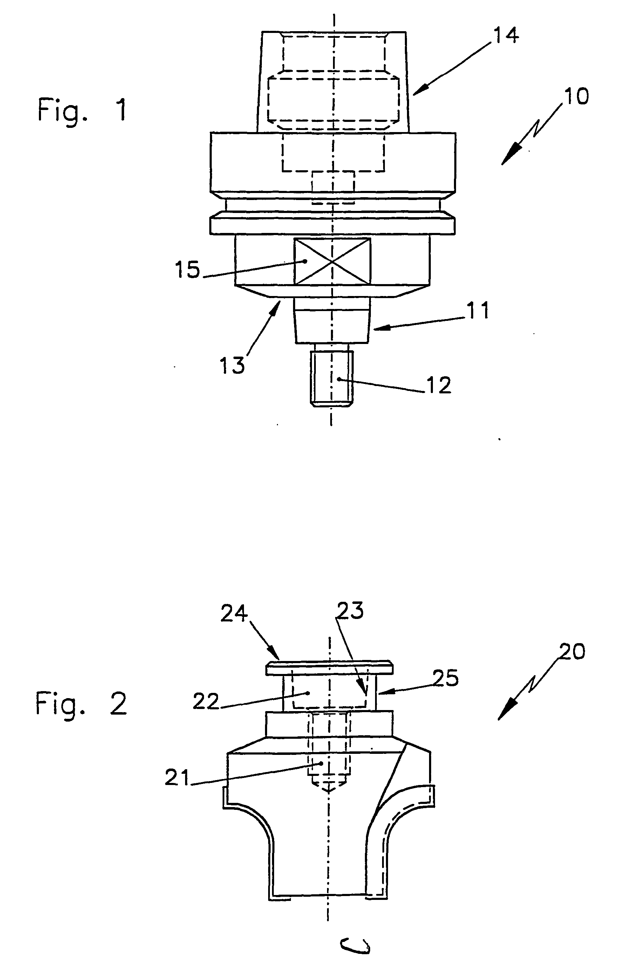

Die Werkzeugaufnahme 10 gemäß Fig. 1 weist an der Maschinenseite einen Konus 14 auf, der in eine entsprechend konisch geformte, hier nicht dargestellte Aufnahme der Werkzeugmaschine einsetzbar ist. Außerdem ist sie an ihrer Spitze mit einem Aufnahmekegel 11 versehen, der an seiner Spitze einen Gewindezapfen 12 trägt. Der Aufnahmekegel 11 springt dabei aus einer planen Anlagefläche 13 an der Vorrichtung 10 hervor. Das in Fig. 2 dargestellte Werkzeug 20, das mit der Aufnahmevorrichtung 10 aus Fig. 1 an einer Werkzeugmaschine gespannt werden kann, weist dementsprechend eine Gewindebohrung 21 auf, die sich nach außen hin zu einer Bohrung 22 erweitert, die eine konische Innenfläche 23 aufweist, wobei die Konizität der Seitenfläche 23 derjenigen des Aufnahmekegels 11 der Werkzeugaufnahme 10 entspricht. Der Gewindezapfen 12 der Aufnahme 10 lässt sich in die Gewindebohrung 21 einschrauben. Ist das Werkzeug 20 völlig auf die Aufnahme 10 aufgeschraubt, so liegt eine die Bohrung 22 begrenzende, ringförmige Anlagefläche 24 des Werkzeugs 20 an der planen Anlagefläche 13 der Aufnahme 10 an. Das Werkzeug 20 und die Aufnahme 10 sind nun sowohl über die Flächen 11, 23 als auch über die Flächen 13, 24 miteinander verbunden und durch die konischen Flächen 11, 23 zentriert und durch die Flächen 13, 24 zusätzlich axial stabilisiert.

Zum Ansetzen von Schrauben- oder Hakenschlüsseln sind sowohl die Spannvorrichtung 10 als auch das Werkzeug 20 mit entsprechenden Angriffsflächen 15 und 25 versehen.

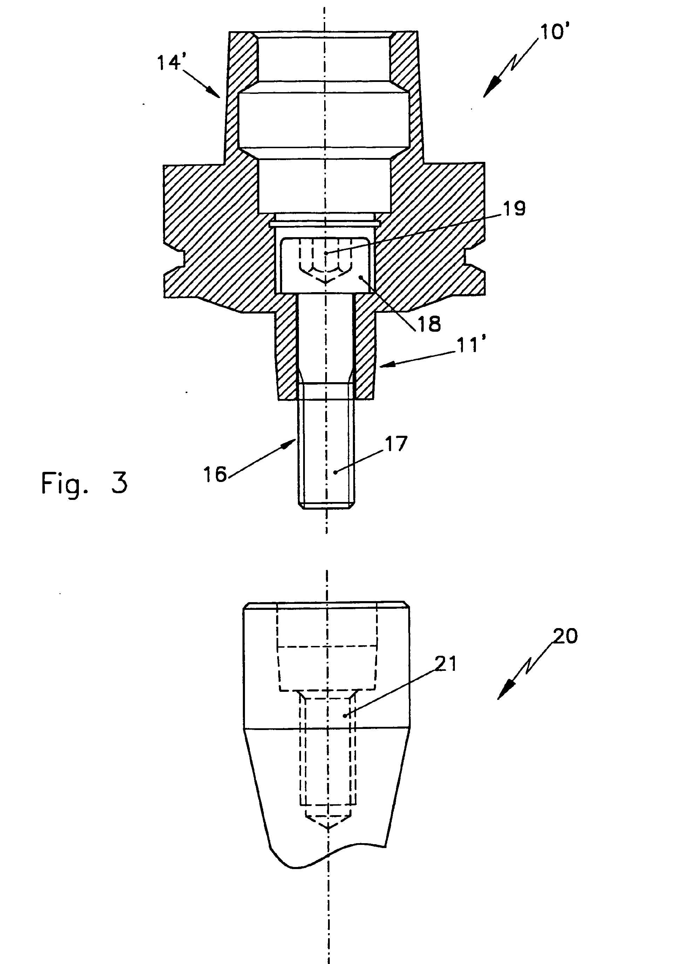

Fig. 3 zeigt eine alternative Ausgestaltung einer Werkzeugaufnahme 10' mit einem Werkzeugaufnahmekegel 11' und einem Konus 14' an der Maschinenseite. Die Werkzeugaufnahme 10' weist jedoch keinen Gewindezapfen zur Verschraubung in der Gewindebohrung 21 des Werkzeugs 20 auf. Stattdessen ist hier eine Schraube 16 mit einem Gewindeschaft 17 vorgesehen, die durch eine zentrale Bohrung in der Werkzeugaufnahme 10' hindurchgeführt ist. Im Kopf 18 der Schraube 16 ist eine Sechskant-Öffnung 19 vorgesehen, sodass die Schraube 16 mittels eines Schlüssels mit dem Werkzeug 20 verschraubbar ist. Anschließend kann die Werkzeugaufnahme 10' mit dem montierten Werkzeug in die Maschine eingesetzt werden.

## Patentansprüche

1. Vorrichtung zur Aufnahme von Werkzeugen (20) an Werkzeugmaschinen mit einem Werkzeugaufnahmekegel (11), dessen Spitze in eine Gewindebohrung (21) im Werkzeug (20) einschraubbar ist, wobei der Aufnahmekegel (11) mit einer Innenkonusfläche (23) des Werkzeugs (20) zu dessen Zentrierung zusammenwirkt, **dadurch gekennzeichnet, dass** der Werkzeugaufnahmekegel (11) einstückig mit der Vorrichtung (10) gebaut ist und aus einer planen Fläche (13) der Vorrichtung (10) vorspringt, gegen die die Stirnseite (24) des Werkzeugs (20) nach Verschrauben des Werkzeugs (20) mit der Werkzeugaufnahme zur Anlage kommt.

2. Vorrichtung nach Anspruch 1, **dadurch gekennzeichnet, dass** der Werkzeugaufnahmekegel (11) mittels eines an der Spitze der Werkzeugaufnahme angeordneten Gewindezapfens (12) in das Werkzeug (20) einschraubbar ist.

3. Vorrichtung nach Anspruch 1, **dadurch gekennzeichnet, dass** der Werkzeugaufnahmekegel (11) mittels einer durch die Werkzeugaufnahme hindurchführbaren Schraube in das Werkzeug (20) einschraubbar ist.

4. Vorrichtung nach Anspruch 3, **dadurch gekennzeichnet, dass** die Schraube in ihrem Kopf eine Öffnung zum Ansetzen eines Werkzeugs, insbesondere eine Sechskant-Öffnung aufweist.

5. Vorrichtung nach einem der Ansprüche 1 bis 4, **dadurch gekennzeichnet, dass** sie auf der Werkzeugmaschinenseite mit einem Konus (14) versehen ist, der in eine entsprechend geformte Aufnahme der Werkzeugmaschine mit Innenkonus einführbar und verspannbar ist.

6. Vorrichtung nach einem der Ansprüche 1 bis 5, **dadurch gekennzeichnet, dass** sie Angriffsflächen (15) oder Öffnungen für Schraubwerkzeuge zur Montage und Demontage an der Werkzeugmaschine sowie zur Montage und Demontage des Werkzeugs (20) aufweist.

7. Vorrichtung nach einem der Ansprüche 1 bis 6, **dadurch gekennzeichnet, dass** der Gewindezapfen (12) oder die Schraube ein Rechts- oder Links-Gewinde trägt.

8. Vorrichtung nach einem der Ansprüche 2 bis 7, **dadurch gekennzeichnet, dass** der Gewindezapfen (12) oder die Schraube mit einem Feingewinde versehen ist.

9. Vorrichtung nach einem der Ansprüche 1 bis 8 mit einem Werkzeug zur Anordnung an der Vorrichtung (10), welches an einer seiner Stirnseiten eine Bohrung (22) mit einer Innenkonusfläche (23) aufweist, die an ihrer Spitze in eine Gewindebohrung (21) mündet, wobei die Bohrungsöffnung an der Stirnseite von einer ringförmigen planen Anlagefläche (24) begrenzt ist, **dadurch gekennzeichnet, dass** es Angriffsflächen (25) oder Öffnungen für Schraubwerkzeuge zur Montage und Demontage an der Vorrichtung (10) zur Aufnahme von Werkzeugen aufweist.

10. Vorrichtung mit Werkzeug nach Anspruch 9, **dadurch gekennzeichnet, dass** es ein rotierend antreibbares Werkzeug ist.

## Claims

1. Device for the reception of tools (20) on machine tools, with a tool receiving taper (11) whose tip can be screwed into a threaded bore (21) in the tool (20), the receiving taper (11) cooperating with an inner taper surface (23) of the tool (20) for centration of the latter, **characterised in that** the tool receiving taper (11) is constructed in one piece with the device (10) and projects from a planar surface (13) of the device (10) against which the end face (24) of the tool (20) abuts when the tool (20) has been screwed onto the tool reception.

2. Device according to claim 1, **characterised in that** the tool receiving taper (11) can be screw connected with the tool (20) by means of a threaded pin (12) provided on the tip of the tool reception.

3. Device according to claim 1, **characterised in that** the tool receiving taper (11) can be screw connected with the tool (20) by means of a screw that passes through the tool reception.

4. Device according to claim 3, **characterised in that** the screw has an opening in its head for engagement by a tool, especially a hexagonal socket.

5. Device according to one of claims 1 to 4, **characterised in that**, on the side towards the machine tool, it is provided with a taper cone (14) which can be entered and clamped in a reception of the machine tool with correspondingly shaped inner taper.

6. Device according to one of claims 1 to 5, **characterised in that** it has engagement surfaces (15) or openings for screw tools for assembly and disassembly on the machine tool and also for assembly and disassembly of the tool (20).

7. Device according to one of claims 1 to 6, **characterised in that** the threaded pin (12) or the screw has a right handed thread or a left handed thread.

8. Device according to one of claims 2 to 7, **characterised in that** the threaded pin (12) or the screw is provided with a fine thread.

9. Device according to one of claims 1 to 8 with a tool to be arranged on the device (10), the tool in one of its end faces having a bore (22) with an inner taper surface (23) which at its tip opens into a threaded bore (21), the opening of the bore at the end face being bounded by an annular planar abutment surface (24), **characterised in that** the tool has engagement surfaces (25) or openings for screw tools for assembly and disassembly on the tool receiving device (10).

10. Device with tool according to claim 9, **characterised in that** it is a rotationally driven tool.

## Revendications

1. Dispositif de réception d'outils (20) sur des machines outils, comprenant un cône de logement d'outil (11), dont la pointe peut être vissée dans un perçage taraudé (21) dans l'outil (20), dans lequel le cône de logement (11) coopère avec une surface de cône interne (23) de l'outil (20) pour son centrage, **caractérisé en ce que** le cône de logement d'outil (11) est formé d'un seul tenant avec le dispositif (10) et fait saillie d'une surface plane (13) du dispositif (10), contre laquelle le côté frontal (24) de l'outil (20) vient en appui après vissage de l'outil (20) avec le logement d'outil.

2. Dispositif selon la revendication 1, **caractérisé en ce que** le cône de logement d'outil (11) peut être vissé dans l'outil (20) au moyen d'un tourillon fileté (12) agencé sur la pointe du logement d'outil.

3. Dispositif selon la revendication 1, **caractérisé en ce que** le cône de logement d'outil (11) peut être vissé dans l'outil (20) au moyen d'une vis pouvant passer à travers le logement d'outil.

4. Dispositif selon la revendication 3, **caractérisé en ce que** la vis présente dans sa tête une ouverture pour mettre en place un outil, en particulier une ouverture hexagonale.

5. Dispositif selon l'une quelconque des revendications 1 à 4, **caractérisé en ce qu'**il est pourvu du côté de la machine outil d'un cône (14), qui peut être guidé et déformé dans un logement de forme correspondante de la machine outil par un cône interne.

6. Dispositif selon l'une quelconque des revendications 1 à 5, **caractérisé en ce qu'**il présente des surfaces de prise (15) ou des ouvertures pour des outils de vissage à des fins de montage et de démontage sur la machine outil, ainsi qu'à des fins de montage et de démontage de l'outil (20).

7. Dispositif selon l'une quelconque des revendications 1 à 6, **caractérisé en ce que** le tourillon fileté (12) ou la vis présente un filet droit ou gauche.

8. Dispositif selon l'une quelconque des revendications 2 à 7, **caractérisé en ce que** le tourillon fileté (12) ou la vis est pourvu(e) d'un filet fin.

9. Dispositif selon l'une quelconque des revendications 1 à 8 avec un outil pour l'agencement sur le dispositif (10) qui présente, sur un de ses côtés frontaux, un perçage (22) avec une surface de cône interne (23), qui débouche sur sa pointe dans un perçage taraudé (21), dans lequel l'ouverture du perçage est délimitée sur le côté frontal par une surface d'appui (24) annulaire plane, **caractérisé en ce qu'**il présente des surfaces de prise (25) ou des ouvertures pour des outils de vissage à des fins de montage et de démontage sur le dispositif (10) pour loger des outils.

10. Dispositif avec outil selon la revendication 9, **caractérisé en ce qu'**il s'agit d'un outil à entraînement rotatif.
